# EUROPÄISCHE PATENTANMELDUNG

(11) **EP 2 486 827 A1**
(43) Veröffentlichungstag der Anmeldung: **15.08.2012**
(21) Anmeldenummer: 12000710.9
(22) Anmeldetag: 03.02.2012
(51) Int. Cl.: A47C 23/043

(54) **Einzelfederelement**

(30) Priorität: 11.02.2011 DE 202011002660 U
(71) Anmelder: Hartmann, Siegbert, 32584 Löhne (DE)
(72) Erfinder: Hartmann, Siegbert, 32584 Löhne (DE)
(74) Vertreter: Rolf, Gudrun

(57) **Zusammenfassung**

Es wird ein Einzelfederelement aus Kunststoff zur Konstruktion von Unterfederungen von Sitz- oder Liegemöbeln oder zur Konstruktion von Federkernen von Matratzen zur Verfügung gestellt, welches dazu in einer Vielzahl in Spalten und Reihen angeordnet ist und jeweils aus mindestens einem flachen oberen Auflagerteller (2), mindestens einem flachen unteren Auflagerteller (3) und mindestens einem dazwischen angeordneten Federkörper (4) besteht und einteilig aufgebaut ist und mit dem sich ohne die Verwendung von zusätzlichen Verbindungselementen mittels mehrfach untereinander vernetzter identischer Einzelfederelemente einfach und schnell, sowie ohne den Einsatz von Werkzeugen, Unterfederungen oder Federkerne verwirklichen lassen, was dadurch erzielt wird, dass jeder Auflagerteller (2;3) sich seitlich erstreckende Laschen (5;6) und/ oder Laschenaufnahmen (7;8) aufweist, die so angeordnet sind, dass sie für Laschen (5;6) und/oder Laschenaufnahmen (7;8) benachbarter identischer Einzelfederelemente (1) jeweils korrespondierende Laschenaufnahmen (7;8) und Laschen (5;6) bilden.

## Beschreibung

Die Erfindung betrifft ein Einzelfederelement aus Kunststoff zur Konstruktion von vernetzten Unterfederungen von Sitz- oder Liegemöbeln oder von Federkernen von Matratzen gemäß dem Oberbegriff des Hauptanspruches.

Es ist ein elastisches Einzelfederelement bekannt, US 5 632 473 A, welches aus einem separaten oberen Auflagerteller, einem separaten unteren Auflagerteller sowie einem separaten und zwischen den beiden Auflagertellern angeordneten elastischen Federkörper besteht, die miteinander zu einem Einzelfederelement zusammengesetzt werden können, wobei zur Erzeugung einer vernetzten Unterfederung oder eines vernetzten Federkerns die oberen und unteren Auflagerteller benachbarter Einzelfederelemente zusätzlich durch weitere Verbindungselemente mechanisch miteinander verbunden werden müssen.

Eine solche Konstruktion ist sehr aufwändig und fertigungsintensiv, ebenso wie eine Vielzahl von Einzelteilen miteinander verbaut werden müssen, um zu dem gewünschten Ergebnis zu gelangen. Dies wirkt sich zudem negativ auf die Dauerhaltbarkeit und die Festigkeit der daraus zusammengesetzten Unterfederungen oder Federkerne aus, ebenso wie diese auf Dauer an den jeweiligen Kontaktstellen gegebenenfalls unangenehme Geräusche erzeugen können.

Aufgabe der Erfindung ist es, ein Einzelfederelement zur Verfügung zu stellen, welches einteilig aufgebaut ist und mit dem sich ohne die Verwendung von zusätzlichen Verbindungselementen mittels mehrfach untereinander vernetzter identischer Einzelfederelemente einfach, schnell und leicht sowie ohne den Einsatz von Werkzeugen Unterfederungen oder Federkerne verwirklichen lassen.

Die Lösung dieser Aufgabe erfolgt in Verbindung mit den Oberbegriffsmerkmalen erfindungsgemäß im Zusammenhang mit den kennzeichnenden Merkmalen des ersten Schutzanspruches insbesondere dadurch, dass jeder Auflagerteller sich seitlich erstreckende Laschen und/ oder Laschenaufnahmen aufweist, die so daran angeordnet sind, dass sie für Laschen und Laschenaufnahmen benachbarter identischer Einzelfederelemente jeweils komplementäre Laschenaufnahmen bzw. Laschen bilden.

Zur Erzeugung einer vernetzten Unterfederung einer Matratze oder zur Herstellung eines Federkerns aus vernetzten Einzelfederelementen müssen diese erfindungsgemäßen Einzelfederelemente also nur noch nebeneinander platziert und in einer seitlichen Annährungsrichtung so zusammengeschoben werden, dass die sich gegenüberliegenden Laschen und Laschenaufnahmen ineinandergreifen und sich in einer gewünschten Position dort verriegeln. Die für ein solches Einzelfederelement erforderliche Spritzgußvorrichtung ist zwar recht aufwändig, jedoch ist das so erzeugte Kunststoff-Einzelfederelement höchst vorteilhaft, da aufgrund seiner Einteiligkeit kein zeit- und abreitsaufwendiger Zusammenbau erfolgen muss und auch eine höhere Betriebssicherheit besteht, weil nicht vorhandnen Einzelteile auch nicht falsch zusammengebaut werden und sich auf Dauer ebenfalls nicht lockern können, sodass auch durch solche lockeren Einzelteile entstehende Geräusche vollständig vermieden werden können. Des Weiteren werden für den Zusammenbau von Unterfederungen oder Federkernen keinerlei Werkzeuge benötigt.

Weitere vorteilhafte Ausgestaltungen des Gegenstandes der Erfindung ergeben sich mit und in Kombination aus den nachfolgenden Unteransprüchen.

Entsprechend einer besonders bevorzugten Ausführungsform der Erfindung sind die Laschen und die Laschenaufnahmen einteilig mit den Auflagertellern ausgebildet, wobei sie Sollbruchstellen aufweisen können, sodass in den Randbereichen von Unterfederungen oder Federkernen seitlich überstehende bzw. nicht benötigte Laschen und Laschenaufnahmen leicht entfernt werden können.

Jede Lasche ist vorteilhafterweise mit mindestens einem Rastnocken und eine Laschenaufnahme mit mindestens einer Nockenaufnahme für jeden Rastnocken versehen, wobei jedoch bevorzugterweise in einer Laschenaufnahme in einer horizontalen Annährungsrichtung zweier Einzelfederelemente mehrere hintereinander angeordnete Nockenaufnahmen eingebracht sind, um die Einzelfederelemente auch in unterschiedlichen Abständen zueinander positionieren zu können. So kann z.B. durch die mehr oder weniger dichte Anordnung von Einzelfederelementen auf die Unterfederungsqualität Einfluss genommen werden. Es können durch eine enge Anordnung von Einzelfederungselementen beispielsweise Bereiche einer stärkeren Unterfederung, etwa im Gesäßbereich, zur Verfügung gestellt werden oder aber im Auflagebereich der unteren Extremitäten eines Menschen eine weniger starke Unterfederung durch eine weiter entfernte Anordnung der Einzelfederungselemente.

Gemäß einer weiteren vorteilhaften Ausführungsform der mit den Rastnocken versehenden Laschen sind diese Rastnocken auf besonders einfach elastisch verformbaren oder durch seitliche Materialausnehmungen so gestalteten Bereichen der Laschen angeordnet, wobei die Laschenaufnahmen ihrerseits Freimachungen in der einer Rastrichtung entgegengesetzten Richtung aufweisen, damit die Rastnocken während des Einschiebens mindestens teilweise entgegen ihrer Rastrichtung bewegt werden, um nach einem Einrasten in der Nockenaufnahme die Einzelfederelemente dort dauerhaft formschlüssig zu verriegeln.

Entsprechend einer besonderen Ausgestaltung der Erfindung sind die Auflagerteller und der Federkörper sofort gemeinsam als Einzelteil spritzgegossen, jedoch ist auch eine weitere besonders vorteilhafte Herstellungsvariante eines solchen einteiligen Einzelfederelementes möglich, bei der der Federkörper in einer zu zueinander parallelen Ebenen durch die Auflagerteller parallelen Mittelebene geteilt ist, oder auch jeder Auflagerteller einen separaten Federkörper aufweist, der oder die dann sofort nach Ihrer Fertigung im Bereich der Mittelebene durch entsprechende Verbindungsmittel unlösbar zu einem einteiligen Einzelfederelement miteinander verbunden werden, wobei eine solche nicht mehr lösbare Verbindung mechanisch, stoffschlüssig oder mittels Klebstoffs erfolgen kann.

Bei einer weiter bevorzugten Ausgestaltung des erfinderischen Einzelfederelementes sind einzelne seiner Baugruppen aus unterschiedlichen Kunststoffen ko-gespritzt, so dass sich beispielsweise die Auflagerteller aus einem für sie optimaleren Kunststoff herstellen lassen, als er für den Federkörper erforderlich ist. Beispielsweise kann durch die Auswahl verschiedener Kunststoffe auch Einfluss auf die Federrate des Einzelfederelementes genommen werden, so dass sich wahlfrei unterschiedliche Federhärten des Einzelfederelementes bei identischem Aussehen oder identischen Abmessungen erzeugen lassen.

Die Laschen und die Laschenaufnahmen sind vorteilhafterweise regelmäßig über die Auflagerteller verteilt angeordnet, etwa jeweils eine Lasche bzw. Laschenaufnahme in der Mitte jeder Körperkante, bei im wesentlichen eckigen Auflagertellern oder aber äquidistant bei kreisrunden Auflagertellern, bei denen beispielsweise entweder vier oder sechs Laschen oder Laschenaufnahmen vorgesehen sein können, je nachdem ob die Einzelfederelemente in Reihen und Spalten oder seitlich versetzt so dicht wie möglich nebeneinander angeordnet werden sollen. Die Laschen und die Laschenaufnahmen vom oberen Auflagerteller können dabei identisch zu denen vom unteren Auflagerteller angeordnet sein, oder aber auch um eine Hochachse des Einzelfederelementes verdreht, wobei es allerdings auch möglich ist, Laschen nur am oberen Auflagerteller und die Laschenaufnahmen nur am unteren Auflagerteller anzuordnen und zu verbindende Einzelfederelemente jeweils wechselweise auf den Kopf gestellt nebeneinander zu platzieren, um sie anschließend miteinander verbinden zu können. Eine solche Bauform wäre nur dann nicht frei wählbar, wenn als Grundform der Auflagerteller rechtwinklige Drei-ecke verwandt werden sollen, bei denen dann die Laschen und Laschenaufnahmen der oberen und unteren Auflagerteller jeweils vertauscht sein müssten. Einer Anordnung von zwei oder mehr Laschen und/ oder Laschenaufnahmen je Körperkante eines Auflagertellers steht ebenfalls nicht im Wege.

Bei einer weiteren vorteilhaften Ausgestaltung der Erfindung können die Auflagerteller unter Beibehaltung der Abmessungen und Entfernungen von den Laschen und Laschenaufnahmen, auch unabhängig voneinander, unterschiedliche Abmessungen, Formen und auch mehr oder weniger durchbrochene Oberflächen aufweisen, so dass sich beispielsweise geschlossenere oder weniger geschlossene Oberflächen der Unterfederungen oder Federkerne erzeugen lassen, wodurch sich wiederum Einfluss auf die Federungseigenschaften oder aber auch auf die Belüftungseigenschaften von aus den erfinderischen Einzelfederelementen gebildeten Unterfederungen oder Federkernen nehmen lässt.

Bevorzugterweise sind die Laschen oder Laschenaufnahmen mit Sollbruchstellen versehen, so dass sie in den Randbereichen entfernt werden können. Sie können jedoch vorteilhafterweise auch mit elastischen Dehnungsbereichen versehen sein, etwa um Bewegungen von Unterfederungsrahmen oder Matratzen auf solchen Rahmen, insbesondere solchen mit verstellbaren Kopf- oder Fußteilen folgen zu können.

Gemäß einer weiteren vorteilhaften Ausgestaltung der Erfindung sind die Laschen und Laschenaufnahmen von im wesentlichen rechteckigen Auflagertellern in Längs-und Querrichtung mit unterschiedlich stabilen Ausführungen versehen, so dass beispielsweise in einer zu erwartenden Hauptbelastungsrichtung mehrerer zusammengesetzter Federelemente eine verstärkte Verrastung vorgesehen ist, um die zu erwartenden Längskräfte sicherer aufnehmen zu können.

Nachfolgend ist ein Ausführungsbeispiel der Erfindung anhand von Zeichnungen näher beschrieben. Es zeigen:

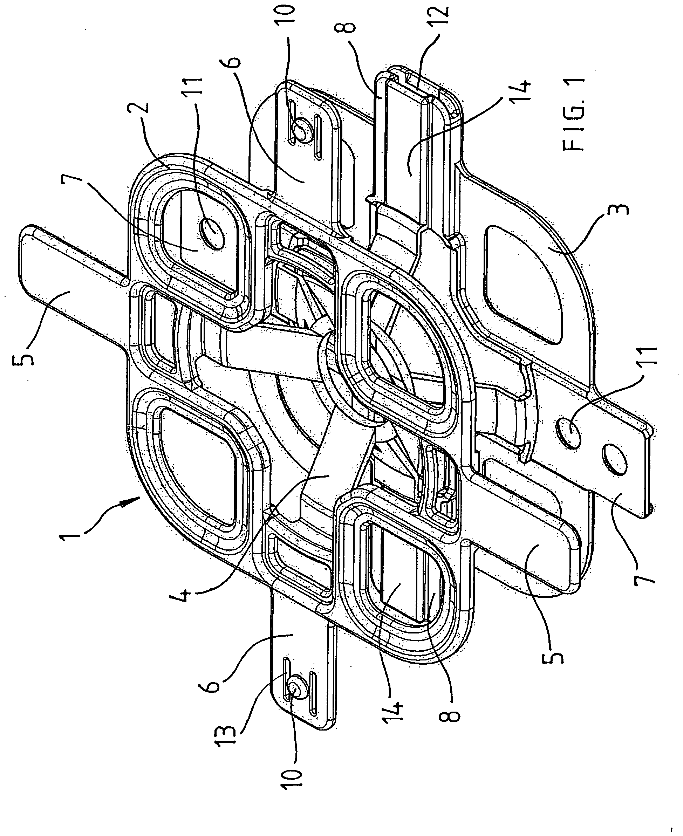

- Fig. 1: ein einzelnes Einzelfederelement in räumlicher Ansicht von schräg oben,
- Fig. 2: vier Einzelfederelemente gemäß der Fig. 1 vor einem Zusammenbau,
- Fig. 3: neun Einzelfederelemente gemäß der Fig. 1 nach einem Zusammenbau in zum Teil unterschiedlichen Abständen,
- Fig. 4: eine Seitenansicht zweier benachbarter Einzelfederelemente gem. Fig. 1 mit verstärkten Rastvorrichtungen vor einem Zusammenbau, und
- Fig. 5: eine Seitenansicht zweier benachbarter Einzelfederelemente gem. Fig. 1 in um 180° gewendeter Position vor einem Zusammenbau.

Das Einzelfederelement 1 besteht aus einem oberen Auflagerteller 2, einem unteren Auflagerteller 3 und einem dazwischen einteilig mit beiden Auflagertellern 2;3 ausgebildeten X-förmigen Federkörper 4.

Die hier im wesentlichen quadratisch ausgebildeten Auflagerteller 2;3, deren Ecken stark abgerundet und deren Oberflächen mit großen Ausnehmungen versehen sind, weisen am oberen Auflagerteller 2 Laschen 5;6 auf sowie am unteren Auflagerteller 3 entsprechende Laschenaufnahmen 7;8, wobei die Laschen 5;6 mit unterschiedlich stark ausgeformten Rastnocken 9;10 versehen sind und die Laschenaufnahmen 7;8 mit entsprechenden Nockenaufnahmen 11;12. Die Laschen 5;6 und Laschenaufnahmen 7;8 erstrecken sich jeweils von den Seitenmitten der quadratischen Auflagerteller 2;3 radial zu einer gedachten Hochachse durch das Einzelfederelement 1 in der Ebene der Auflagerteller 2;3 nach außen, wobei sich die gegenüberliegenden Laschen 5;6 und die gegenüberliegenden Laschenaufnahmen 7;8 eines Auflagertellers 2;3 entweder mit einfachen Rastnocken 10 und Nockenaufnahmen 12 oder mit den verstärkten Rastnocken 9 und ebenfalls verstärkten Nockenaufnahmen 11 ausgestattet sind, so dass bei einer Anordnung der Einzelfederelemente 1 in Reihen und Spalten in einer Richtung ein festerer Zusammenhalt der Einzelfederelemente 1 gegeben ist als in der dazu rechtwinkligen Richtung.

Zeichnerisch nicht dargestellt ist eine mögliche Ausführungsform der Erfindung mit zwei oder mehreren sich von jeweils einer Seite der Auflagerteller 2;3 nach außen erstreckenden Laschen 5;6 oder Laschenaufnahmen 7;8.

Die Laschenaufnahmen 7;8 weisen dabei in einer Annährungsrichtung zweier benachbarter Einzelfederelemente 1 zwei hintereinander angeordnete Nockenaufnahmen 11;12 auf, so dass die Einzelfederelemente 1 in unterschiedlichen Abständen zueinander miteinander verrastet werden können. Denkbar ist ebenfalls eine Ausgestaltung der Erfindung mit einer höheren Anzahl von Rastmöglichkeiten.

Die Rastnocken 10 sind auf besonders leicht elastisch verformbaren Bereichen 14 der Laschen 6 angeordnet, wobei diese einfache Verformbarkeit auch durch seitliche Materialausnehmungen 13 neben den Rastnocken 10 erzeugt sein kann, so dass diese auf einer Art Federsteg angeordnet sind. Um in die Nockenaufnahmen 12 eingeschoben werden zu können, sind diese mit Freimachungen 14 versehen, in die der Federsteg während eines Montagevorganges ausweichen kann, bis die Rastnocke 10 in einer entsprechenden Nockenaufnahme 12 einrasten kann.

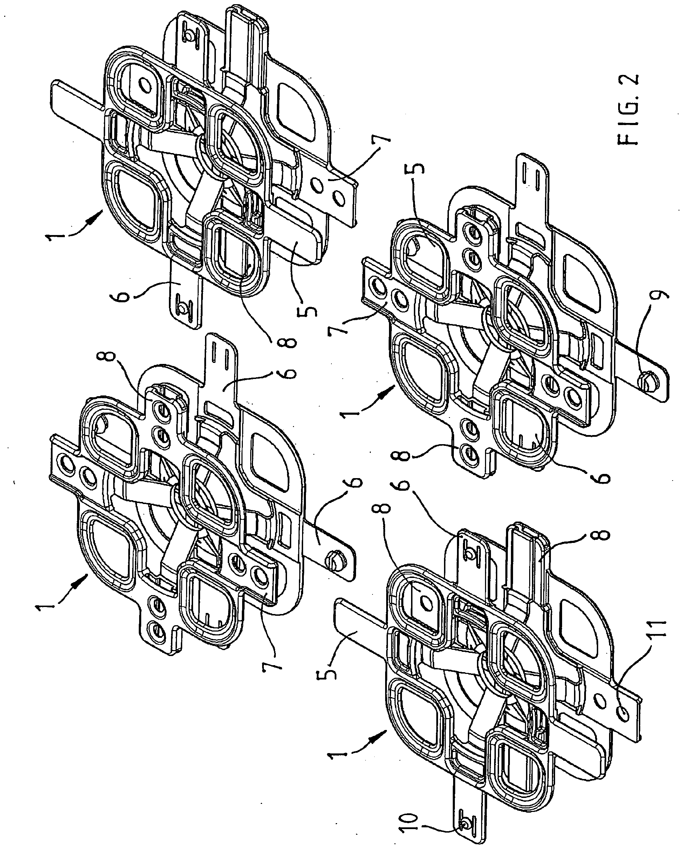

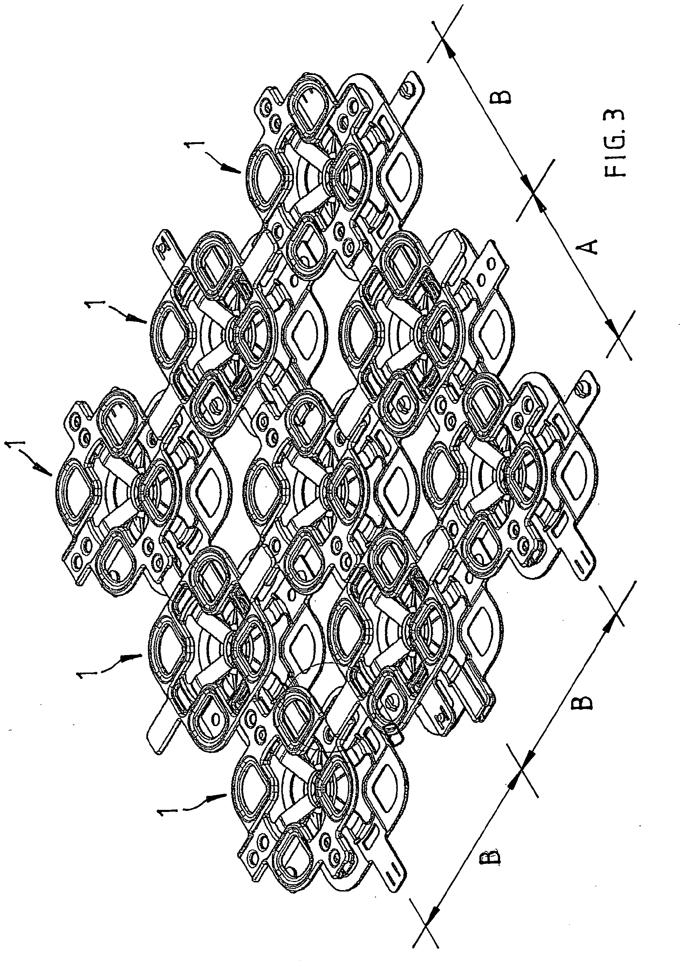

Wie in Fig. 2 dargestellt, lassen sich vier identische Einzelfederelemente 1 nach jeweiliger Drehung um 180° zum jeweils benachbarten Einzelfederelement 1 mit ihren Laschen 5;6 in die Laschenaufnahmen 7;8 des benachbarten Einzelfederelementes 1 einschieben, wobei dies, wie in Fig. 3 dargestellt, in einer engeren Position A und einer weiter entfernten Position B möglich ist.

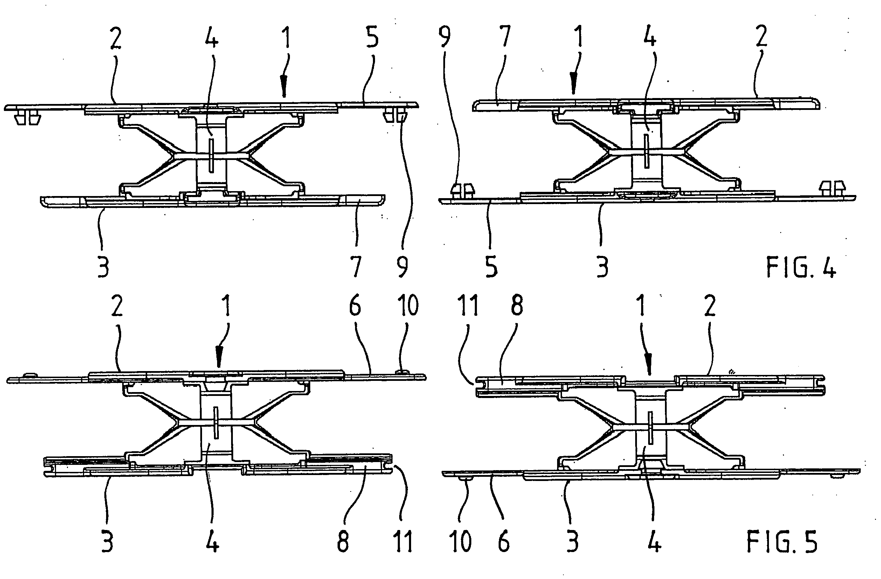

In Fig. 4 und 5 werden jeweils zwei gegeneinander um 180° gedrehte Einzelfederelemente dargestellt, wie sie in einer Längsrichtung oder in einer Querrichtung einer Unterfederung eines Sitz- oder Liegemöbels oder eines Federkernes einer Matratze vorliegen können.

## Patentansprüche

1. Einzelfederelement aus Kunststoff zur Konstruktion von Unterfederungen von Sitz- oder Liegemöbeln oder von Federkernen von Matratzen, welches dazu in einer Vielzahl in Spalten und Reihen angeordnet ist, aus jeweils mindestens einem flachen oberen Auflagerteller (2) und mindestens einem flachen unteren Auflagerteller (3) und mindestens einem dazwischen angeordneten Federkörper, **dadurch gekennzeichnet, dass** jeder Auflagerteller (2;3) sich seitlich erstreckende Laschen (5;6) und/ oder Laschenaufnahmen (7;8) aufweist, die so angeordnet sind, dass sie für Laschen (5;6) und/ oder Laschenaufnahmen (7;8) benachbarter identischer Einzelfederelemente (1) jeweils korrespondierende Laschenauf-nahmen (7;8) und Laschen (5;6) bilden.

2. Einzelfederelement nach Anspruch 1, **dadurch gekennzeichnet, dass** die Laschen (5;6) und die Laschenaufnahmen (7;8) einteilig mit den Auflagertellern (2;3) ausgebildet sind.

3. Einzelfederelement nach einem der vorgenannten Ansprüche, **dadurch gekennzeichnet, dass** eine Lasche (5;6) mit mindestens einem Rastnocken (9;10) und eine Laschenaufnahme (7;8) mit mindestens einer Nockenaufnahme (11;12) für jeden Rastnocken (9;10), insbesondere in einer horizontalen Annährungsrichtung zweier Einzelfederelemente (1) mit mehreren hintereinander angeordneten Nockenaufnahmen (11) versehen ist.

4. Einzelfederelement nach Anspruch 3, **dadurch gekennzeichnet, dass** die Rastnocken (10) auf elastisch verformbaren oder durch seitliche Materialausnehmungen (13) so gestalteten Bereichen (14) der Laschen (6) angeordnet sind und die Laschenaufnahmen (13) Freimachungen (14) in eine einer Rastrichtung entgegengesetzten Richtung für Teile dieser Bereiche (14) aufweisen.

5. Einzelfederelement nach einem der vorgenannten Ansprüche, **dadurch gekennzeichnet, dass** die Auflagerteller (2;3) und der Federkörper (4) einteilig spritzgegossen sind oder dass der Federkörper (4) in einer zu zueinander parallelen Ebenen durch die Auflagerteller (2;3) parallelen Mittelebene geteilt ist, der dort Verbindungsmittel zur bleibenden Verbindung mit seinem anderen Bauteil aufweist und ein Auflagerteller (2;3) und der halbe Federkörper (4) gemeinsam als Einzelteil spritzgegossen und zwei solcher Bauteile unlösbar zu einem einteiligen Einzelfederelement (1) miteinander verbunden sind.

6. Einzelfederelement nach Anspruch 5, **dadurch gekennzeichnet, dass** einzelne seiner Baugruppen aus unterschiedlichen Kunststoffen ko-spritzgegossen sind.

7. Einzelfederelement nach einem der vorgenannten Ansprüche, **dadurch gekennzeichnet, dass** die Laschen (5;6) und die Laschenaufnahmen (7;8) regelmäßig über die Auflagerteller (2;3) verteilt angeordnet sind und die Laschen (5;6) und die Laschenaufnahmen (7;8) vom oberen Auflagerteller (2) und vom unteren Auflagerteller (3) jeweils exakt übereinander oder gegeneinander um eine Hochachse des Einzelfederelementes (1) verdreht angeordnet sind.

8. Einzelfederelement nach einem der vorgenannten Ansprüche 1 bis 6, **dadurch gekennzeichnet, dass** die Laschen (5;6) nur am oberen Auflagerteller (2) und die Laschenaufnahmen (7;8) nur am unteren Auflagerteller (3) angeordnet sind und zu verbindende Einzelfederelemente jeweils wechselweise auf den Kopf gestellt nebeneinander platziert miteinander verbindbar sind.

9. Einzelfederelement nach einem der vorgenannten Ansprüche, **dadurch gekennzeichnet, dass** die oberen und unteren Auflagerteller (2;3) unabhängig von einem konstanten Abmessungsverhältnis der Laschen (5;6) und Laschenaufnahmen (7;8), auch voneinander unterschiedliche Abmessungen, Formen und mehr oder weniger durchbrochene Flächen aufweisen.

10. Einzelfederelement nach einem der vorgenannten Ansprüche, **dadurch gekennzeichnet, dass** die Laschen (5;6) und/ oder die Laschenaufnahmen (7;8) Sollbruchstellen und/ oder elastische Dehnungsbereiche aufweisen.

11. Einzelfederelement nach einem der vorgenannten Ansprüche, **dadurch gekennzeichnet, dass** bei einem im wesentlichen mit rechteckigen Auflagertellern (2;3) ausgestatten Einzelfederelement (1) die Laschen (5) und die Laschenaufnahmen (7) und/ oder deren Rastvorrichtung in Richtung einer bevorzugten Längs- oder Queranordnung einer Unterfederung oder eines Federkerns in deren zu erwartenden Hauptbelastungsrichtung verstärkt ausgebildet sind.
